# EUROPÄISCHE PATENTSCHRIFT

(11) **EP 3 068 806 B1**
(45) Veröffentlichungstag und Bekanntmachung des Hinweises auf die Patenterteilung: **15.03.2017**
(21) Anmeldenummer: 14793828.6
(22) Anmeldetag: 28.10.2014
(51) Int. Cl.: C08F 2/22, C08F 2/24, C08F 218/08, C09D 131/04, C09J 131/04

(54) **VERWENDUNG EINER FUSSBODENBELAGSKLEBER-ZUSAMMENSETZUNG MIT EINEM VINYLACETAT-ETHYLEN-MISCHPOLYMERISAT**
USE OF A FLOOR COVERING ADHESIVE COMPOSITION COMPRISING A VINYL ACETATE-ETHYLENE COPOLYMER
UTILISATION D'UNE COMPOSITION ADHÉSIVE DE REVÊTEMENT DE SOL COMPORTANT UN COPOLYMÈRE ACÉTATE DE VINYLE-ÉTHYLÈNE

(30) Priorität: 14.11.2013 DE 102013223196
(43) Veröffentlichungstag der Anmeldung: 21.09.2016
(73) Patentinhaber: Wacker Chemie AG, 81737 München (DE)
(72) Erfinder: BAUERS, Florian, 84489 Burghausen (DE); KAISER, Stephan, 84359 Simbach (DE)
(74) Vertreter: Schuderer, Michael
(86) Internationale Anmeldenummer: PCT/EP2014/073140
(87) Internationale Veröffentlichungsnummer: WO 2015/071095

(56) Entgegenhaltungen:
- EP-A2- 0 321 868
- GB-A- 1 408 894
- US-A- 4 128 518
- US-A- 4 239 563

## Beschreibung

Solche Mischpolymerisate mit einem hohen Anteil an OH-Acrylsäureester-Monomereinheiten, in der Verwendung als wärmefeste Haftkleber, sind auch in der EP 0 216 210 A1 beschrieben.
Aus der EP 0 699 691 A1 ist bekannt, dass sich die Klebeeigenschaften von wässrigen Dispersionen von Vinylacetat-Ethylen-Copolymerisaten dadurch verbessern lassen, indem die Dispersion mit vollverseiftem Polyvinylalkohol, das heißt einem Polyvinylalkohol mit einem Hydrolysegrad von mehr als 90 Mol-%, modifiziert wird. Problematisch ist dabei die Kompatibilität von Vinylacetat-Ethylen-Copolymer-Dispersionen, welche teilverseiften Polyvinylalkohol enthalten, mit solchen hochverseiften Polyvinylakoholen. Um die Kompatibilität zu verbessern wird vorgeschlagen ein Gemisch aus teilverseiften Polyvinylalkoholen zur Stabilisierung der Vinylacetat-Ethylen-Copolymerdispersion einzusetzen.
In der EP 1 069 169 A1 wird vorgeschlagen, die Balance bezüglich VOC-Emission und Klebeeigenschaften dadurch zu verbessern, indem anstelle von (Meth)acrylsäureester-Comonomeren Vinylester von alpha-verzweigten Carbonsäuren (Vinylversaticsäureester, wie VeoVa9 oder VeoVa10 von Momentive) copolymerisiert werden. Aber auch solche Vinylester unterliegen der Hydrolyse und freigesetzte Versaticsäure führt, analog zu durch Hydrolyse freigesetzten Hydroxycarbonsäuren, zu unangenehmen Geruch bei der Anwendung als Klebemittel.
Die EP 0 530 013 A1 beschreibt Klebemittel auf der Basis von Vinylacetat-Ethylen-Mischpolymerisaten, wobei für Fußbodenkleber ein Mischpolymerisat empfohlen wird, welches mittels Copolymerisation von 5 bis 85 Gew.-% Vinylacetat, 10 bis 50 % Ethylen und 5 bis 85 Gew.-% eines höheren Vinylesters wie Vinyl-2-ethylhexanoat erhalten wird. Nachteilig sind die hohen Kosten aufgrund der hohen Anteile an höheren Vinylestern sowie die verlängerte Polymerisationsdauer bei der Copolymerisation von großen Mengen an höheren Vinylestern.

Solche Mischpolymerisate mit einem hohen Anteil an OH-Acrylsäureester-Monomereinheiten, in der Verwendung als wärmefeste Haftkleber, sind auch in der EP 0 216 210 A1 beschrieben.

Aus der EP 0 699 691 A1 ist bekannt, dass sich die Klebeeigenschaften von wässrigen Dispersionen von Vinylacetat-Ethylen-Copolymerisaten dadurch verbessern lassen, indem die Dispersion mit vollverseiftem Polyvinylalkohol, das heißt einem Polyvinylalkohol mit einem Hydrolysegrad von mehr als 90 Mol-%, modifiziert wird. Problematisch ist dabei die Kompatibilität von Vinylacetat-Ethylen-Copolymer-Dispersionen, welche teilverseiften Polyvinylalkohol enthalten, mit solchen hochverseiften Polyvinylalkoholen. Um die Kompatibilität zu verbessern wird vorgeschlagen ein Gemisch aus teilverseiften Polyvinylalkoholen zur Stabilisierung der Vinylacetat-Ethylen-Copolymerdispersion einzusetzen.

In der EP 1 069 169 A1 wird vorgeschlagen, die Balance bezüglich VOC-Emission und Klebeeigenschaften dadurch zu verbessern, indem anstelle von (Meth)acrylsäureester-Comonomeren Vinylester von alpha-verzweigten Carbonsäuren (Vinylversaticsäureester, wie VeoVa9 oder VeoVa10 von Momentive) copolymerisiert werden. Aber auch solche Vinylester unterliegen der Hydrolyse und freigesetzte Versaticsäure führt, analog zu durch Hydrolyse freigesetzten Hydroxycarbonsäuren, zu unangenehmen Geruch bei der Anwendung als Klebemittel.

Die EP 0 530 013 A1 beschreibt Klebemittel auf der Basis von Vinylacetat-Ethylen-Mischpolymerisaten, wobei für Fußbodenkleber ein Mischpolymerisat empfohlen wird, welches mittels Copolymerisation von 5 bis 85 Gew.-% Vinylacetat, 10 bis 50 % Ethylen und 5 bis 85 Gew.-% eines höheren Vinylesters wie Vinyl-2-ethylhexanoat erhalten wird. Nachteilig sind die hohen Kosten aufgrund der hohen Anteile an höheren Vinylestern sowie die verlängerte Polymerisationsdauer bei der Copolymerisation von großen Mengen an höheren Vinylestern.

Aufgabe der Erfindung war es daher, einen Fußbodenbelagskleber auf Basis einer wässrigen Dispersion von Vinylacetat-Ethylen-Mischpolymerisaten zur Verfügung zu stellen, bei welchem diese Emissionsproblematik nicht auftritt, der aber bezüglich der Klebeeigenschaften gegenüber Fußbodenklebern auf Acrylatbasis nicht abfällt.

Gegenstand der Erfindung ist eine Fussbodenbelagskleber-Zusammensetzung, auf der Basis einer wässrigen, mit Emulgator stabilisierten Polymerdispersion von Vinylacetat-Ethylen-Mischpolymerisat, enthaltend
A) klebrigmachendes Harz,
B) ein oder mehrere Füllstoffe und
C) ein Vinylacetat-Ethylen-Mischpolymerisat in Form einer mit Emulgator stabilisierten wässrigen Dispersion,
dadurch gekennzeichnet, dass das Vinylacetat-Ethylen-Mischpolymerisat erhalten wird durch radikalisch initiierte Emulsionspolymerisation, in wässrigem Medium von
a) 60 bis 89,9 Gew.-% Vinylacetat,
b) 10 bis 36 Gew.-% Ethylen,
c) 0 bis 2 Gew.-% eines oder mehrerer Monomere aus der Gruppe der Vinylester von Carbonsäuren mit 8 bis 12 C-Atomen und der Acrylsäurealkylester mit C₁- bis C₈-Alkylrest,
d) 0,1 bis 5 Gew.-% eines oder mehrerer ethylenisch ungesättigte Hilfsmonomere mit Carbonsäuregruppe, Amidgruppe, Nitrilgruppe oder Sulfonsäure(salz)gruppe,
wobei die Angaben in Gew.-% jeweils auf das Gesamtgewicht der Comonomere bezogen sind und sich auf 100 Gew.-% aufaddieren, und die Polymerisation in Gegenwart eines oder mehrerer Emulgatoren ausgeführt wird.

Geeignete klebrigmachende Harze A) sind beispielsweise Kolophoniumharze, insebesondere Balsamharze, Tallharze, Wurzelharze, oder Kohlenwasserstoffharze wie Terpenharze, Cumaron-Inden-Harze. Diese Harze können gegebenenfalls noch modifiziert sein, beispielsweise mittels Veresterung mit mehrwertigen Alkoholen wie Ethylenglykol, Glycerin oder Pentaerythrit. Vorzugsweise enthält die Fussbodenbelagskleber-Zusammensetzung 5 bis 35 Gew.-% klebrigmachendes Harz A), bezogen auf das Gesamtgewicht der Fussbodenbelagskleber-Zusammmensetzung.

Geeignete Füllstoffe B) sind beispielsweise gemahlene oder gefällte Calciumcarbonate (Kreiden) oder Quarzmehl oder Kaolin. Der Füllstoffanteil beträgt vorzugsweise 15 bis 50 Gew.-%, bezogen auf das Gesamtgewicht der Fussbodenbelagskleber-Zusammmensetzung.

Die wässrige Dispersion C) des Vinylacetat-Ethylen-Mischpolymerisats wird vorzugsweise in einer Menge von 15 bis 50 Gew.-%, bezogen auf das Gesamtgewicht der Fussbodenbelagskleber-Zusammmensetzung, eingesetzt.

Zur Herstellung der wässrigen Dispersion C) werden vorzugsweise 66 bis 86 Gew.-% Vinylacetat a), bezogen auf das Gesamtgewicht der Comonomere, copolymerisiert.

Vorzugsweise werden 10 bis 30 Gew.-% Ethylen b), bezogen auf das Gesamtgewicht der Comonomere, copolymerisiert.

Geeignete Monomere c) sind beispielsweise Vinyllaurat, Vinyl-2-ethylhexanoat, Methylacrylat, Ethylacrylat, Propylacrylat, n-Butylacrylat, 2-Ethylhexylacrylat. Bevorzugt werden Vinyllaurat und n-Butylacrylat. Vorzugsweise werden die Monomere c) in einer Menge von 0,1 bis 2 Gew.-%, besonders bevorzugt in einer Menge von 0,1 bis 1 Gew.-% copolymerisiert, jeweils bezogen auf das Gesamtgewicht der Comonomere.

Geeignete Hilfsmonomere d) sind beispielsweise ethylenisch ungesättigte Mono- und Dicarbonsäuren wie Acrylsäure, Methacrylsäure, Itaconsäure, Maleinsäure und Maleinsäureanhydrid. Weitere Beispiele für Hilfsmonomere sind ethylenisch ungesättigte Carbonsäureamide und -nitrile wie Acrylamid und Acrylnitril. Geeignete Hilfsmonomere sind auch ethylenisch ungesättigte Sulfonsäuren oder deren Salze wie Vinylsulfonsäure(salz) oder 2-Acrylamido-2-methylpropansulfonsäure(salz). Die Hilfsmcnomere d) werden in einer Menge von 0,1 bis 5 Gew.-%, bevorzugt in einer Menge von 0,1 bis 4 Gew.-% copolymerisiert, jeweils bezogen auf das Gesamtgewicht der Comonomere.

Die Angaben in Gewichtsprozent für die Comonomere a), b), d) sowie gegebenenfalls c) addieren sich in den Mischpolymerisaten jeweils auf 100 Gew.-% auf. Im allgemeinen erfolgt die Monomerauswahl bzw. die Auswahl der Gewichtsanteile der Comonomere so, dass eine Glasübergangstemperatur Tg von vorzugsweise -20°C bis 0°C resultiert. Die Glasübergangstemperatur Tg der Polymerisate kann in bekannter Weise mittels Differential Scanning Calorimetry (DSC) in Anlehnung an ASTM D3418-82 als Midpoint Temperature ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Besonders bevorzugte Mischpolymerisate werden erhalten mittels Copolymerisation von a) 66 bis 86 Gew.-% Vinylacetat, b) 10 bis 30 Gew.-% Ethylen, c) 0,1 bis 2 Gew.-% Vinyllaurat und/oder n-Butylacrylat, sowie 0,1 bis 4 Gew.-% ein oder mehrere Hilfsmonomere d) aus der Gruppe der ethylenisch ungesättigten Mono- und Dicarbonsäuren, der ethylenisch ungesättigten Carbonsäureamide und der ethylenisch ungesättigten Sulfonsäuren oder deren Salze, insbesondere Acrylsäure, Acrylamid, Vinylsulfonsäure(salz), wobei sich die Angaben in Gew.-% jeweils auf 100 Gew.-% aufaddieren.

Die Herstellung nach dem Emulsionspolymerisationsverfahren, erfolgt bei 30°C bis 120°C, vorzugsweise 45°C bis 70°C, und bei einem Druck von 30 bis 100 bar abs., vorzugsweise 40 bis 80 bar abs. Die Polymerisation kann im Batchverfahren, wobei alle Komponenten im Reaktor vorgelegt werden, und im Dosierverfahren, wobei einzelne oder mehrere Komponenten während der Polymerisation zugeführt werden, durchgeführt werden. Die Dosierungen können separat (räumlich und zeitlich) durchgeführt werden oder die zu dosierenden Komponenten können alle oder teilweise voremulgiert dosiert werden.

Die Initiierung der Polymerisation erfolgt vorzugsweise mit den für die Emulsionspolymerisation gebräuchlichen Redox-Initiator-Kombinationen. Beispiele für geeignete Oxidationsinitiatoren sind die Natrium-, Kalium- und Ammoniumsalze der Peroxodischwefelsäure, Wasserstoffperoxid, t-Butylhydroperoxid, Cumolhydroperoxid, Isopropylbenzolmonohydroperoxid. Bevorzugt werden die Natrium-, Kalium- und Ammoniumsalze der Peroxodischwefelsäure und Wasserstoffperoxid. Die genannten Initiatoren werden im allgemeinen in einer Menge von 0,015 bis 3,0 Gew.-%, bezogen auf das Gesamtgewicht der Monomere, eingesetzt.

Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat (Brüggolit) und (Iso-)Ascorbinsäure(salze). Bevorzugt werden Ascorbinsäure, Natriumisoascorbat, Natriumsulfit und das unter dem Handelsnamen Brueggolit® FF6 bekannte Sulfinsäurederivat eingesetzt. Die Reduktionsmittelmenge beträgt vorzugsweise 0,01 bis 2 Gew.-%, bezogen auf das Gesamtgewicht der Monomere.

Die genannten Oxidationsmittel, insbesondere die Salze der Peroxodischwefelsäure, können auch alleinig als thermische Initiatoren eingesetzt werden.

Die Stabilisierung des Polymerisationsansatzes erfolgt in Gegenwart eines oder mehrerer Emulgatoren. Als Emulgatoren werden vorzugsweise nichtionische Emulgatoren oder anionischen Emulgatoren oder Gemische aus nichtionischen und anionischen Emulgatoren eingesetzt.

Geeignete nichtionische Emulgatoren sind beispielsweise Acyl-, Alkyl-, Oleyl- und Alkylarylethoxylate. Diese Produkte sind beispielsweise im Handel unter der Bezeichnung Genapol^{(R)} oder Lutensol^{(R)} erhältlich. Hierunter fallen ethoxylierte Mono-, Di- und Tri-Alkylphenole, vorzugsweise mit einem Ethoxylierungsgrad von 3 bis 50 Ethylenoxid-Einheiten und C₄- bis C₁₂-Alkylresten, sowie ethoxylierte Fettalkohole, vorzugsweise mit einem Ethoxylierungsgrad von 3 bis 80 Ethylenoxid-Einheiten und C₈- bis C₃₆-Alkylresten. Geeignete nichtionische Emulgatoren sind auch C₁₃-C₁₅-Oxoalkoholethoxylate mit einem Ethoxylierungsgrad von 3 bis 30 Ethylenoxid-Einheiten, C₁₆-C₁₈-Fettalkoholethoxylate mit einem Ethoxylierungsgrad von 11 bis 80 Ethylenoxid-Einheiten, C₁₀-Oxoalkoholethoxylate mit einem Ethoxylierungsgrad von 3 bis 11 Ethylenoxid-Einheiten, C₁₃-Oxoalkoholethoxylate mit einem Ethoxylierungsgrad von 3 bis 20 Ethylenoxid-Einheiten, Polyoxyethylensorbitanmonooleat mit 20 Ethylenoxidgruppen, Copolymere aus Ethylenoxyd und Propylenoxyd mit einem Mindestgehalt von 10 Gew.-% Ethylenoxid, Polyethylenoxid-Ether von Oleylalkohol mit einem Ethoxylierungsgrad von 4 bis 20 Ethylenoxid-Einheiten sowie die Polyethylenoxid-Ether von Nonylphenol mit einem Ethoxylierungsgrad von 4 bis 20 Ethylenoxid-Einheiten.

Bevorzugt werden ethoxylierte Fettalkohole, vorzugsweise mit einem Ethoxylierungsgrad von 3 bis 80 Ethylenoxid-Einheiten und C₈- bis C₃₆-Alkylresten; C₁₃-C₁₅-Oxoalkoholethoxylate mit einem Ethoxylierungsgrad von 3 bis 30 Ethylenoxid-Einheiten; C₁₆-C₁₈-Fettalkoholethoxylate mit einem Ethoxylierungsgrad von 11 bis 80 Ethylenoxid-Einheiten.

Beispiele für geeignete anionische Emulgatoren sind Natrium-, Kalium- und Ammoniumsalze von geradkettigen aliphatischen Carbonsäuren mit 12 bis 20 C-Atomen; Natriumhydroxyoctadecansulfonat; Natrium-, Kalium- und Ammoniumsalze von Hydroxyfettsäuren mit 12 bis 20 C-Atomen und deren Sulfonierungs- und/oder Acetylierungsprodukte; Natrium-, Kalium- und Ammoniumsalze von Alkylsulfaten, auch als Triethanolaminsalze, und Natrium-, Kalium- und Ammoniumsalze von Alkylsulfonaten mit jeweils 10 bis 20 C-Atomen und von Alkylarylsulfonaten mit 12 bis 20 C-Atomen; Dimethyldialkylammoniumchlorid mit 8 bis 18 C-Atomen und deren Sulfonierungsprodukte; Natrium-, Kalium- und Ammoniumsalze von Sulfobernsteinsäureestern mit aliphatischen gesättigten einwertigen Alkoholen mit 4 bis 16 C-Atomen und von Sulfobernsteinsäure-4-Estern mit Polyethylenglykolethern von einwertigen aliphatischen Alkoholen mit 10 bis 12 C-Atomen, insbesondere deren Di-Natriumsalze, und von Sulfobernsteinsäure-4-Ester mit Polyethylenglykolnonylphenylether, insbesondere dessen DiNatriumsalz, und von Sulfobernsteinsäure-bis-cyclohexylester, insbesondere dessen Natriumsalz; Ligninsulfonsäure sowie deren Calcium-, Magnesium-, Natrium- und Ammoniumsalze; Harzsäuren sowie hydrierte und dehydrierte Harzsäuren sowie deren Alkalisalze.

Bevorzugt werden die Natrium-, Kalium- und Ammoniumsalze von Sulfobernsteinsäureestern mit aliphatischen, gesättigten, einwertigen Alkoholen mit 4 bis 16 C-Atomen.

Die Emulgatormenge beträgt vorzugsweise 3 bis 10 Gew.-%, bezogen auf das Gesamtgewicht der Monomere. Es können auch Gemische aus nichtionischen und anionischen Emulgatoren in der genannten Menge eingesetzt werden.

Gegebenenfalls können geringe Mengen von bis zu 1 Gew.-%, bezogen auf das Gesamtgewicht der Monomere, Schutzkolloide eingesetzt werden. Geeignete Schutzkolloide sind Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Styrolmaleinsäure- und Vinylethermaleinsäure-Copolymere. Beispiele für Polyvinylalkohole sind teilverseifte Polyvinylalkohole mit einem Hydrolysegrad von 80 bis 95 Mol-% und einer Höpplerviskosität, in 4 %-iger wässriger Lösung, von 1 bis 30 mPas (Methode nach Höppler bei 20°C, DIN 53015). Die Polymerisation wird vorzugsweise ohne den Zusatz von Schutzkolloid durchgeführt.

Die wässrigen Dispersionen C) haben einen Feststoffgehalt von 30 bis 75 Gew.-%, vorzugsweise von 40 bis 65 Gew.-%.

Die Fußbodenbelagskleber-Zusammensetzung wird durch Abmischen der Komponenten A), B) und C) in den dafür üblichen Mischagregaten hergestellt. Gegebenenfalls können noch weitere Zusatzstoffe wie Verarbeitungshilfsmittel, Emulgatoren, Verdickungshilfsmittel oder Wasser zugegeben werden.

Die Fußbodenbelagskleber-Zusammensetzung eignet sich zur Verklebung von Parkett, Laminat, Kunststoffbodenbelägen, Teppichböden, Bodenbelägen aus Naturstoffen wie Kork, Sisal, Linoleum, auf Untergründen wie Beton, Estrich, Holzfaserplatten.

Vorteilhaft an der erfindungsgemäßen Fußbodenbelagskleber-Zusammensetzung ist, dass keine oder nur äußerst geringe Mengen an Alkoholen wie Butanol durch Verseifung aus der Dispersion auf alkalischen Untergründen freigesetzt werden können, und gleichzeitig die anwendungstechnischen Eigenschaften, insbesondere Nassklebezeit und Zugscherfestigkeit, von auf Acrylaten basierenden Polymerdispersionen erreicht werden.

Demgegenüber zeigen Fußbodenbelagskleber-Zusammensetzungen mit Vinylacetat-Ethylen-Copolymeren mit vergleichbarer Tg, schlechtere Verarbeitbarkeit, geringe Lagerzeit und eine wesentlich schlechtere Qualität der Verklebung.

### Die nachfolgenden Beispiele dienen der weiteren Erläuterung der Erfindung:

### Zur Testung wurde eine Fußbodenbelagskleber-Zusammensetzung mit folgender Zusammensetzung eingesetzt:

| | |
|---|---|
| Klebemitteldispersion | 32,0 Gew.-% |
| Kollophoniumharz-Mischung | 20,0 Gew.-% |
| Füllstoff (Omyacarb 6, Omya GmbH) | 10,0 Gew.-% |
| Füllstoff (Omyacarb 20,Omya GmbH) | 26,0 Gew.-% |
| Emulgator (Witcolate B 320) | 0,5 Gew.-% |
| Verdicker (Latecoll D, 4 %-ig) | 8,5 Gew.-% |
| Wasser | 3,0 Ges.-% |

### Beispiel 1:

### Fußbodenbelagskleber-Zusammensetzung mit der Klebemitteldispersion A:

Wässrige Copolymerdispersion, welche mittels Emulsionspolymerisation von 66,5 Gew.-% Vinylacetat, 29,4 Gew.-% Ethylen, 0,7 Gew.-% n-Butylacrylat, 2,0 Gew.-% Acrylsäure und 1,4 Gew.-% Acrylamid in Gegenwart von 2,4 Gew.-% eines Emulgatorgemisches aus einem ethoxylierten Sulfosuccinathalbester und einem ethoxylierten Isotridecylalkohol erhalten wurde. Die Dispersion hatte einen Festgehalt von 57,0 %. Das Copolymerisat hatte eine Tg von -10°C.

### Vergleichsbeispiel 1:

### Fußbodenbelagskleber-Zusammensetzung mit der Klebemitteldispersion B:

Wässrige Copolymerdispersion, welche mittels Emulsionspolymerisation von 75,0 Gew.-% Vinylacetat und 25,0 Gew.-% Ethylen in Gegenwart von 2,4 Gew.-% eines Emulgatorgemisches aus einem ethoxylierten Sulfosuccinathalbester und einem ethoxylierten Isotridecylalkohol erhalten wurde. Die Dispersion hatte einen Festgehalt von 57 %. Das Copolymerisat hatte eine Tg von -10°C.

### Vergleichsbeispiel 2:

### Fußbodenbelagskleber-Zusammensetzung mit der Klebemitteldispersion C:

Wässrige Copolymerdispersion, welche mittels Emulsionspolymerisation von 34,6 Gew.-% Vinylacetat, 18,5 Gew.-% Ethylen, 44,7 Gew.-% 2-Ethylhexylacrylat, 1,2 Gew.-% Acrylsäure und 1 Gew.-% Acrylamid in Gegenwart von 2,4 Gew.-% eines Emulgatorgemisches aus einem ethoxylierten Sulfosuccinathalbester und einem ethoxylierten Isotridecylalkohol erhalten wurde. Die Dispersion hatte einen Festgehalt von 57,0 %. Das Copolymerisat hatte eine Tg von -38°C.

### Mess- und Prüfmethoden:

### Die Klebemitteleigenschaften wurden mit folgenden Bestimmungsmethoden ermittelt:

### Bestimmung der Verstreichbarkeit des Fußbodenbelagsklebers (Viskositätsfaktor VF):

Die Fußbodenbelagskleber-Zusammensetzung wurde jeweils einen Tag im Klimaraum bei 23°C und 50 % relativer Luftfeuchte gelagert. Dann wurde die Viskosität mit einem Viskosimeter der Fa. Brookfield (RVDV II+), mittels der bei dem entsprechenden Meßbereich einzusetzenden Spindel, bei 23°C und jeweils 1 Umdrehung pro Minute (UPM) und 100 Umdrehungen pro Minute gemessen. Das Verhältnis aus der Brookfield-Viskosität bei 1 UPM und 100 UPM wird als Viskositätsfaktor VF bezeichnet und ist ein Maß für die Verstreichbarkeit des Fußbodenbelagsklebers.

### Lagerbeständigkeit des Fußbodenbelagsklebers (Lagerbeständigkeit LB):

Die Fußbodenbelagskleber-Zusammensetzung wurde jeweils in eine 250 ml Glasflasche eingefüllt, wobei die Glasflasche zu ca. 90 Vol.-% gefüllt war. Nach dem Verschließen wurde die Glasflasche in einem Wärmeschrank bei 50°C gelagert. Die Beurteilung der Klebstoff-Konsistenz erfolgte jeweils nach 1, 2, 3 und 4 Wochen Lagerung.

### Bestimmung der Nassklebezeit des Fußbodenbelagsklebers (Nassklebezeit NKZ):

Die Fußbodenbelagskleber-Zusammensetzung wurde jeweils auf eine Buchensperrholzplatte (200 x 400 mm) in Längsrichtung mittels einer Pajarito-Zahnspachtel (Zahnung TKB B2) aufgetragen. Nach 20 Minuten wurden 50 x 200 mm große Teststreifen eines PVC-Bodenbelages quer zum Klebstoffauftrag eingelegt und mittels eines 3,5 kg schweren Rollengewichtes 5 mal (hin und her) angewalzt. Sofort danach wurde mit einer Federwaage möglichst gleichmäßig (ca. 50 mm/min) abgeschält.

Der Einlegevorgang wurde im unbenutzten Klebstoffbett im 10 Minuten-Zyklus wiederholt.

Als Nassklebezeit wird die Zeit definiert, nach der nur noch ca. 70 % des PVC-Teststreifens benetzt werden (Kohäsionsbruch beim Abziehen).

### Bestimmung der Zugscherfestigkeit des Fußbodenbelagsklebers (Zugscherfestigkeit ZSF):

Zunächst wurden Prüfkörper aus Mosaikparkettlamellen (Eiche, 140 mm x 23 mm x 8 mm) in einem Klimaraum bei 23°C und 50 % relativer Luftfeuchte hergestellt. Jeweils 6 Mosaikparkettlamellen wurden hierzu nebeneinander gelegt und in Längsrichtung eine Klebefläche von 26,1 x 23 mm mit einem Klebeband abgeklebt. Die Fußbodenbelagskleber-Zusammensetzung wurde jeweils mit einer Pajarito-Zahnspachtel (Zahnung TKB B2) aufgetragen, danach das Klebeband abgezogen.

Nach 10 Minuten wurde jeweils eine zweite Mosaikparkettlamelle auf die zu verklebende Fläche aufgelegt. Die Prüfkörper wurden dann mit einem Gewicht von 2 kg je 6 Prüfkörper für 1 h beschwert.

Die Prüfkörper wurden danach folgendermaßen gelagert:
3 Prüfkörper wurden 3 Tage bei 23°C und 50 % relativer Luftfeuchte (Normklima) gelagert (Normklimalagerung NK).
3 Prüfkörper wurden 1 Tag bei 23°C und 50 % relativer Luftfeuchte, danach 3 Tage bei 50°C in einem Wärmeschrank und abschliessend 1 Tag bei 23°C und 50 % relativer Luftfeuchte gelagert (Wärmelagerung WL).

Die Zugscherfestigkeiten wurden nach EN 14293:2006 mit einer Zugprüfmaschine (Fa. Zwick, Ulm) bestimmt.

Die Messergebnisse sind in Tabelle 1 zusammengefasst.

**Tabelle 1: Eigenschaften der Fußbodenkleber**

| Beispiel | VF | LB 50°C | NKZ | ZSF (NK) | ZSF (WL) |
|---|---|---|---|---|---|
| Bsp. 1 | 40 | 4 Wochen | 40 min | 1,3 N/mm² | 1, 6 N/mm² |
| Vbsp. 1 | 11 | 1 Woche | 10 min | 0,2 N/mm² | 0,5 N/mm² |
| Vbsp. 2 | 28 | 4 Wochen | 50 min | 1,2 N/mm² | 1,6 N/mm² |

### Diskussion der Ergebnisse aus Tabelle 1:

Die erfindungsgemäße Fußbodenbelagskleber-Zusammensetzung (Beispiel 1) zeichnete sich durch eine gute Verstreichbarkeit (VF > 30), lange Lagerbeständigkeit (LB) und hohe Zugscherfestigkeiten (ZSF) aus. Die Fußbodenbelagskleber-Zusammensetzung aus Beispiel 1 zeigte vergleichbare Zugscherfestigkeiten bei wesentlich verbesserter Verstreichbarkeit (Verarbeitbarkeit) im Vergleich mit dem Klebemittel mit einem hohen Gehalt an Acrylatmonomer (Vergleichsbeispiel 2).

Die Fußbodenbelagskleber-Zusammensetzung aus Vergleichsbeispiel 1 zeigte eine sehr schlechte Verstreichbarkeit (VF), ungenügende Lagerstabilität (LB) und deutlich schlechtere Zugscherfestigkeiten (ZSF) als die erfindungsgemäße Fußbodenbelagskleber-Zusammensetzung aus Beispiel 1.

### Beurteilung des Geruchs an Dispersionsfilmen von Dispersionen:

Durch Verdünnen der Polymerdispersionen mit Wasser wurden ca. 30 %-ige wässrige Dispersionen erzeugt und durch Zugabe von 10 %-iger wässeriger Natronlauge auf einen pH-Wert von 9,5 eingestellt. Zur Herstellung von Filmen wurden die so behandelten Dispersionen auf eine Silikonkautschukplatte gegossen und anschließend 48 Stunden bei 23°C und 50 % relativer Luftfeuchte getrocknet. Die so erhaltenen Filme vom Format 15 cm x 10 cm wurden in eine auf 75°C vorgeheizte 250ml-Weithalsglasflasche mit Schraubdeckel eingebracht und 5 Minuten in einen auf 75°C geheizten Trockenschrank gestellt. Anschließend ließ man auf Raumtemperatur abkühlen und die Geruchsintensität von drei Testpersonen anhand einer Notenskala von 1 (sehr gut) bis 6 (sehr schlecht) beurteilen.

Beurteilt wurde die Dispersion aus Beispiel 1, aus Vergleichsbeispiel 2 und eine Vergleichsdispersion D, welche mit dem Verfahren aus Beispiel 1 der EP 1069169 hergestellt wurde.

Die Ergebnisse der Geruchsprüfung sind in Tabelle 2 wiedergegeben:

**Tabelle 2:**

| Dispersion | A (Beispiel 1) | C (Vergleichsbeispiel 2) | D (Bsp. 1 aus der EP 1069169) |
|---|---|---|---|
| | | | |
| Testperson 1 | 2 | 5 | 3 |
| Testperson 2 | 2 | 5 | 4 |
| Testperson 3 | 2 | 4 | 4 |

Bei der Geruchsprüfung an Dispersionsfilmen erhält die Dispersion aus Beispiel 1 eine bessere Beurteilung als die Dispersion aus Vergleichsbeispiel 2 und als die Vergleichsdispersion D gemäß EP 1 069 169 A1. Bei der Dispersion C fiel insbesondere ein stechender Geruch auf.

## Patentansprüche

1. Verwendung einer Fussbodenbelagskleber-Zusammensetzung, auf der Basis einer wässrigen, mit Emulgator stabilisierten Polymerdispersion von Vinylacetat-Ethylen-Mischpolymerisat, enthaltend
A) klebrigmachendes Harz, B) ein oder mehrere Füllstoffe und C) ein Vinylacetat-Ethylen-Mischpolymerisat in Form einer mit Emulgator stabilisierten wässrigen Dispersion, zur Verklebung von Parkett, Laminat, Kunststoffbodenbelägen, Teppichböden, Bodenbelägen aus Naturstoffen wie Kork, Sisal, Linoleum auf Untergründen wie Beton, Estrich, Holzfaserplatten,
**dadurch gekennzeichnet, dass** das Vinylacetat-Ethylen-Mischpolymerisat erhalten wird durch radikalisch initiierte Emulsionspolymerisation, in wässrigem Medium von
a) 60 bis 89,9 Gew.-% Vinylacetat,
b) 10 bis 36 Gew.-% Ethylen,
c) 0 bis 2 Gew.-% eines oder mehrerer Monomere aus der Gruppe der Vinylester von Carbonsäuren mit 8 bis 12 C-Atomen und der Acrylsäurealkylester mit C₁- bis C₈-Alkylrest,
d) 0,1 bis 5 Gew.-% eines oder mehrerer ethylenisch ungesättigte Hilfsmonomere mit Carbonsäuregruppe, Amidgruppe, Nitrilgruppe oder Sulfonsäure(salz)gruppe,
wobei die Angaben in Gew.-% jeweils auf das Gesamtgewicht der Comonomere bezogen sind und sich auf 100 Gew.-% aufaddieren, und die Polymerisation in Gegenwart eines oder mehrerer Emulgatoren ausgeführt wird.

2. Verwendung nach Anspruch 1, **dadurch gekennzeichnet, dass** 5 bis 35 Gew.-% klebrigmachendes Harz A) enthalten sind.

3. Verwendung nach Anspruch 1. oder 2, **dadurch gekennzeichnet, dass** 15 bis 50 Gew.-% Füllstoffe B) enthalten sind.

4. Verwendung nach Anspruch 1 bis 3, **dadurch gekennzeichnet, dass** 15 bis 50 Gew.-% Dispersion C) enthalten sind.

5. Verwendung nach Anspruch 1 bis 4, **dadurch gekennzeichnet, dass** 66 bis 86 Gew.-% Vinylacetat a), bezogen auf das Gesamtgewicht der Comonomere, copolymerisiert werden.

6. Verwendung nach Anspruch 1 bis 5, **dadurch gekennzeichnet, dass** 10 bis 30 Gew.-% Ethylen b), bezogen auf das Gesamtgewicht der Comonomere, copolymerisiert werden.

7. Verwendung nach Anspruch 1 bis 6, **dadurch gekennzeichnet, dass** 0,1 bis 2 Gew.-% Monomere c), bezogen auf das Gesamtgewicht der Comonomere, copolymerisiert werden.

8. Verwendung nach Anspruch 1 bis 7, **dadurch gekennzeichnet, dass** 0,1 bis 4 Gew.-% Hilfsmonomere d), bezogen auf das Gesamtgewicht der Comonomere, copolymerisiert werden.

9. Verwendung nach Anspruch 1 bis 8, **dadurch gekennzeichnet, dass** die wässrige Dispersion mit einem oder mehreren nichtionischen oder anionischen Emulgatoren oder Gemischen von nichtionischen und anionischen Emulgatoren stabilisiert ist.

## Claims

1. Use of a floor covering adhesive composition, on the basis of an aqueous, emulsifier-stabilized polymer dispersion of vinyl acetate-ethylene copolymer, comprising
A) tackifying resin, B) one or more fillers and C) a vinyl acetate-ethylene copolymer in the form of an emulsifier-stabilized aqueous dispersion,
for adhesively bonding woodblock flooring, laminate, plastic floor coverings, carpets, floor coverings made from natural materials such as cork, sisal, linoleum on substrates such as concrete, screed, wood fiberboard,
**characterized in that** the vinyl acetate-ethylene copolymer is obtained by radically initiated emulsion polymerization, in aqueous medium, of
a) 60 to 89.9 wt% of vinyl acetate,
b) 10 to 36 wt% of ethylene,
c) 0 to 2 wt% of one or more monomers from the group of the vinyl esters of carboxylic acids having 8 to 12 C atoms and the acrylic acid alkyl esters with C₁ to C₈ alkyl radical,
d) 0.1 to 5 wt% of one or more ethylenically unsaturated auxiliary monomers with carboxylic acid group, amide group, nitrile group or sulfonic acid (salt) group,
the figures in wt% being based in each case on the total weight of the comonomers and adding up to 100 wt%, and the polymerization being performed in the presence of one or more emulsifiers.

2. Use according to Claim 1, **characterized in that** 5 to 35 wt% of tackifying resin A) are included.

3. Use according to Claim 1 or 2, **characterized in that** 15 to 50 wt% of fillers B) are included.

4. Use according to Claim 1 to 3, **characterized in that** 15 to 50 wt% of dispersion C) are included.

5. Use according to Claim 1 to 4, **characterized in that** 66 to 86 wt% of vinyl acetate a), based on the total weight of the comonomers, are copolymerized.

6. Use according to Claim 1 to 5, **characterized in that** 10 to 30 wt% of ethylene b), based on the total weight of the comonomers, are copolymerized.

7. Use according to Claim 1 to 6, **characterized in that** 0.1 to 2 wt% of monomers c), based on the total weight of the comonomers, are copolymerized.

8. Use according to Claim 1 to 7, **characterized in that** 0.1 to 4 wt% of auxiliary monomers d), based on the total weight of the comonomers, are copolymerized.

9. Use according to Claim 1 to 8, **characterized in that** the aqueous dispersion is stabilized with one or more nonionic or anionic emulsifiers or mixtures of nonionic and anionic emulsifiers.

## Revendications

1. Utilisation d'une composition de colle pour revêtement de sol, à base d'une dispersion aqueuse de polymère de copolymérisat acétate de vinyle-éthylène stabilisée avec un émulsifiant, contenant A) une résine tackifiante, B) une ou plusieurs charges et C) un copolymérisat acétate de vinyle-éthylène sous forme d'une dispersion aqueuse stabilisée avec un émulsifiant, pour le collage de parquet, aggloméré laminé, revêtements de sol en matière plastique, moquettes, revêtements de sol à base de matières naturelles telles que liège, sisal, linoléum sur des supports tels que béton, chape, panneaux de fibres de bois,
**caractérisée en ce que** le copolymérisat acétate de vinyle-éthylène est obtenu par polymérisation en émulsion à amorçage radicalaire, en milieu aqueux, de
a) 60 à 89,9 % en poids d'acétate de vinyle,
b) 10 à 36 % en poids d'éthylène,
c) 0 à 2 % en poids d'un ou de plusieurs monomères choisis dans le groupe des esters vinyliques d'acides carboxyliques ayant de 8 à 12 atomes de carbone et des acrylates d'alkyle à radical alkyle en C₁-C₈,
d) 0,1 à 5 % en poids d'un ou de plusieurs monomères auxiliaires à insaturation éthylénique, à groupe carboxy, groupe amido, groupe nitrile ou groupe sulfo (sel),
les données en % en poids se rapportant chacune au poids totale des comonomères et s'ajoutant pour faire 100 % en poids, et la polymérisation étant effectuée en présence d'un ou de plusieurs émulsifiants.

2. Utilisation selon la revendication 1, **caractérisée en ce que** 5 à 35 % en poids de résine tackifiante A) sont contenus.

3. Utilisation selon la revendication 1 ou 2, **caractérisée en ce que** 15 à 50 % en poids de charges B) sont contenus.

4. Utilisation selon l'une quelconque des revendications 1 à 3, **caractérisée en ce que** 15 à 50 % en poids de dispersion C) sont contenus.

5. Utilisation selon l'une quelconque des revendications 1 à 4, **caractérisée en ce qu'**on copolymérise 66 à 86 % en poids d'acétate de vinyle a), par rapport au poids total des comonomères.

6. Utilisation selon l'une quelconque des revendications 1 à 5, **caractérisée en ce qu'**on copolymérise 10 à 30 % en poids d'éthylène b), par rapport au poids total des comonomères.

7. Utilisation selon l'une quelconque des revendications 1 à 6, **caractérisée en ce qu'**on copolymérise 0,1 à 2 % en poids de monomères c), par rapport au poids total des comonomères.

8. Utilisation selon l'une quelconque des revendications 1 à 7, **caractérisée en ce qu'**on copolymérise 0,1 à 4 % en poids de monomères auxiliaires d), par rapport au poids total des comonomères.

9. Utilisation selon l'une quelconque des revendications 1 à 8, **caractérisée en ce que** la dispersion aqueuse est stabilisée avec un ou plusieurs émulsifiants anioniques ou non ioniques ou des mélanges d'émulsifiants anioniques et d'émulsifiants non ioniques.
